# EUROPEAN PATENT SPECIFICATION

(11) **EP 1 818 521 B1**
(45) Date of publication and mention of the grant of the patent: **15.12.2010**
(21) Application number: 06256595.7
(22) Date of filing: 28.12.2006
(51) Int. Cl.: F01N 1/00, F01N 1/10, F01N 3/28

(54) **Muffler and vehicle equipped with muffler**
Schalldämpfer und damit ausgerüstetes Fahrzeug
Pot d'échappement et véhicule équipé d'un pot d'échappement

(30) Priority: 06.01.2006 JP 2006001894; 23.06.2006 JP 2006174461
(43) Date of publication of application: 15.08.2007
(73) Proprietor: Yamaha Hatsudoki Kabushiki Kaisha, Shizuoka-ken 438-8501 (JP)
(72) Inventor: Shimomura, Kazuhiko c/o Yamaha Hatsudoki Kabushiki Kaisha, Shizuoka-ken 438-8501 (JP)
(74) Representative: Lamb, Martin John Carstairs

(56) References cited:
- FR-A1- 2 604 747
- GB-A- 1 354 551
- GB-A- 2 371 334
- US-A- 4 371 053
- US-A- 5 248 859
- US-A- 5 663 537
- US-A1- 2002 112 915

## Description

### FIELD OF THE INVENTION

The present invention relates to a muffler and a vehicle equipped with a muffler, and more particularly the invention relates to inhibiting reduction in engine performance and to reducing exhaust noise volume.

### BACKGROUND TO THE INVENTION

Conventionally, a muffler has a conduit that passes through an expansion chamber. Exhaust gas from an engine flows out to the expansion chamber from holes formed in a side surface of an upstream section of the conduit, then flows into the conduit again through holes formed in a side surface of a downstream section of the conduit, and finally is exhausted to the open air from a downstream end of the conduit.

A motorcycle equipped with this type of muffler can inhibit the generation of unpleasant noise and generate a pleasant exhaust sound. Thus, the rider of the motorcycle can enjoy the exhaust sound generated by the muffler in addition to the engine noise. Examples of such a muffler are disclosed in JP-A-2005-090237. or US 2002/0 112 915 A1.

However, because attention is focused in the conventional technology on achieving a pleasant exhaust sound, not enough consideration is given to reducing exhaust noise volume. The inventor of the invention has completed repeated diligent investigations concerning this matter. As a result, it has been found that, in a conduit that passes through an expansion chamber, a reduction in the inner diameter of a section of the conduit that is formed with holes that allow exhaust gas to flow out into the expansion chamber can reduce exhaust noise volume. However, the flow of the exhaust gas out into the expansion chamber from the conduit is made worse and as a result engine performance is reduced.

The invention has been devised in light of the above and other problems, and it is an object thereof to provide a muffler and a vehicle equipped with a muffler that can inhibit reduction in engine performance and at the same time reduce exhaust noise volume.

### SUMMARY OF THE INVENTION

A muffler according to a first aspect of the invention comprises an expansion chamber and a conduit that passes through the expansion chamber. The conduit includes: a partition region comprising a partition wall, preferably located in a central section of the conduit; an upstream section provided to the upstream side of the partition region and having an outflow section defining a side surface in which at least one outflow hole is formed that allows exhaust gas to flow out into the expansion chamber; and a downstream section provided to the downstream side of the partition region and having an inflow section defining a side surface in which at least one inflow hole is formed that allows exhaust gas to flow in from the expansion chamber. The inner diameter of at least one section of the downstream section is smaller than the inner diameter of the outflow section.

It should be understood that references to diameters used herein is for clarity and conciseness and that this does not limit the reference to round structures. As such, non-round structures also fall within the scope of the present invention.

According to the invention, a muffler is provided that can that can inhibit reduction in engine performance and at the same time reduce exhaust noise volume. More specifically, in the conduit that passes through the expansion chamber, the inner diameter of the at least one section of the downstream section is smaller than the inner diameter of the outflow section. As a result, the performance of the engine is not impaired by hindrance of the flow of exhaust gas from the outflow holes of the outflow section into the expansion chamber. In addition, exhaust noise volume can be reduced. Accordingly, in a vehicle equipped with a muffler according to an embodiment of the present invention, it is possible to inhibit the generation of unpleasant noise while achieving a pleasant exhaust sound that has a volume that is suitably reduced.

In the first aspect of the invention, the at least one section of the downstream section may be located to the downstream side from the inflow section. This arrangement may prevent the flow of exhaust gas from the expansion chamber to the inflow holes of the inflow section from being hindered because the inner diameter of the conduit in the inflow section is not restricted. Thus, engine performance reduction can be reliably inhibited, and exhaust noise volume can be reduced.

In addition, in the first aspect of the invention, the inner diameter of the outflow section may be equal to or larger than the inner diameter of the section to the upstream side from the outflow section of the upstream section. If this structure is adopted, it is possible to reliably ensure that the surface area of the side surface that is used for forming outflow holes is increased per axial direction unit length of the outflow section. Thus, it is possible to reliably inhibit engine performance from being reduced by hindrance of the flow of exhaust gas from the outflow holes to the expansion chamber, and it is possible to reduce exhaust noise volume.

In addition, in the first aspect of the invention, the length of the at least one section of the downstream section may be equal to or greater than the combined length of the length of the outflow section and the length of the inflow section. If this structure is adopted, it is possible to reliably ensure that, in the downstream section, the length of the section with the inner diameter that is smaller than the inner diameter of the outflow section is longer. As a result, reduction of engine performance can be inhibited and exhaust noise volume can be effectively reduced.

A vehicle according to an aspect of the invention comprises a muffler as described above. According to this invention, a vehicle equipped with a muffler is provided that can inhibit reduction in engine performance and at the same time reduce exhaust noise volume. More specifically, in the vehicle, it is possible to inhibit generation of unpleasant noise while generating a pleasant exhaust sound that has a volume that is suitably reduced. As a result, the rider of the vehicle can enjoy the sound of the exhaust noise in addition to the engine sound. Note that, the vehicle according to the invention is not particularly limited to a vehicle that runs using the driving force of an engine. Accordingly, the vehicle may be a motorcycle (which includes mopeds (scooters)), a four wheel buggy (an all-terrain vehicle), a snowmobile, or the like.

Aspects of the invention are set forth in the independent claims. Optional features of the invention are set forth in the dependent claims.

### BRIEF DESCRIPTION OF THE DRAWINGS

These and other aspect of the present invention will now be described, by way of example only, with reference to the accompanying drawings, in which
Fig. 1 is a side view of a motorcycle according to embodiments of the invention;
Fig. 2 is a cross sectional view of a muffler according to a first embodiment of the invention;
Fig. 3 is a cross sectional view of a muffler according to a second embodiment of the invention;
Fig. 4 is a cross sectional view of a muffler according to a third embodiment of the invention;
Fig. 5 is a cross sectional view of a muffler according to a fourth embodiment of the invention;
Fig. 6 is a cross sectional view of a muffler according to a fifth embodiment of the invention;
Fig. 7 is a cross sectional view of a muffler according to a sixth embodiment of the invention; and
Fig. 8 is a cross sectional view of a muffler according to a seventh embodiment of the invention.

### DETAILED DESCRIPTION OF THE DRAWINGS

Hereinafter, a muffler and a vehicle equipped with a muffler according to embodiments of the invention will be described with reference to the drawings. Each of the embodiments herein below describes an example in which the vehicle according to the invention is applied as a motorcycle.

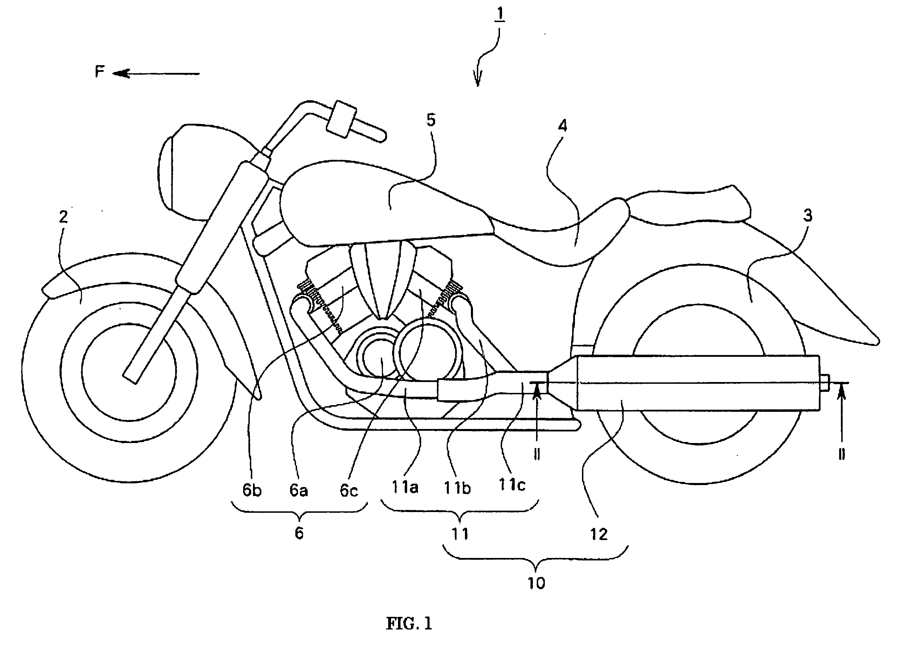

Fig. 1 is a side view of a motorcycle 1 according to the present invention. The motorcycle 1 includes a front wheel 2 and a rear wheel 3 that are rotatably supported by a vehicle body; a seat 4 on which a rider sits; a fuel tank 5 for storing fuel; and an engine 6 that generates driving force for driving the rear wheel 3. In the embodiment shown, the engine 6 is a 4-stroke, V-type, 2 cylinder engine that has a crank case 6a, a front cylinder head section 6b and a rear cylinder head section 6c that extend in the vehicle upward direction while respectively inclining in the vehicle forward direction (the direction indicated by the arrow F shown in Fig. 1) and the vehicle rear direction from the crank case 6a. Injectors (not shown) and throttle valves (not shown) for respectively supplying fuel to the engine 6 from the fuel tank 5 and air that mixes with a given amount of fuel, are connected to intake ports (not shown) of the front cylinder head section 6b and the rear cylinder head section 6c, respectively. The engine 6 generates driving force by combusting the fuel.

In addition, the motorcycle 1 is equipped with a muffler 10 that exhausts exhaust gas from the engine 6 and that muffles exhaust noise. An upstream end of the muffler 10 is connected respectively to exhaust ports (not shown) of the front cylinder head section 6b and the rear cylinder head section 6c. The muffler 10 has an exhaust pipe 11 and a muffler body 12 in accordance with a first embodiment of the present invention. The exhaust pipe 11 includes a front exhaust pipe 11a and a rear exhaust pipe 11b that extend in the vehicle rear direction from the connecting section with the exhaust ports; and an exhaust pipe downstream end section 11c where a downstream section of the front exhaust pipe 11a and a downstream section of the rear exhaust pipe 11b merge with each other. The muffler body 12 is connected to and extends in the vehicle rear direction from the downstream end of the exhaust pipe 11, namely, the downstream end of exhaust pipe downstream end section 11c.

In the motorcycle 1, exhaust gas from the engine 6 flows from a combustion chamber of the front cylinder head section 6b and a combustion chamber of the rear cylinder head section 6c, along the respective front exhaust pipe 11a and the rear exhaust pipe 11b and merges together in the exhaust pipe downstream end section 11c. The exhaust gas then flows from the exhaust pipe downstream end section 11c and is introduced to the muffler body 12, before finally being exhausted into the open air from a downstream end of the muffler body 12.

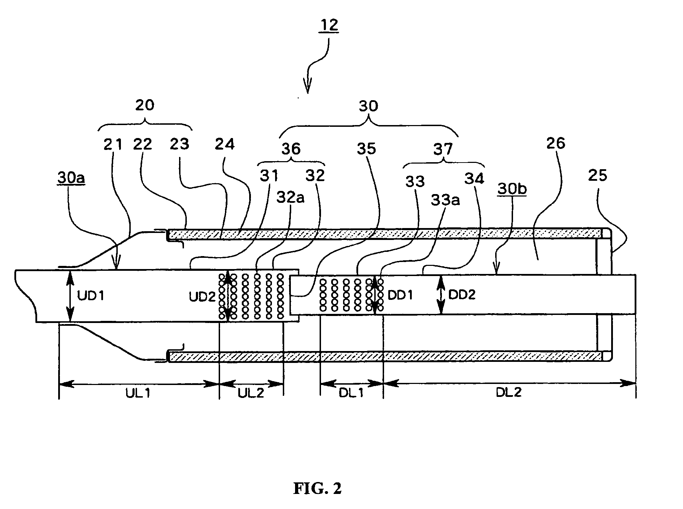

Fig. 2 is a cross sectional view of the muffler body 12 when it has been cut down line II-II shown in Fig. 1. As can be seen from Fig. 2, the muffler body 12 has a body section 20 and a single conduit 30. A single expansion chamber 26 is provided inside the body section 20, and the conduit 30 passes through the entire body section 20 in the longitudinal direction from an upstream end to a downstream end thereof.

A section at the upstream side of the body section 20 forms a taper section 21 that has a taper shape. The upstream end of the taper section 21 is connected by welding to a side surface of the conduit 30 so as to block the upstream end of the expansion chamber 26 and the inner diameter of the taper section 21 increases from the connecting section toward the downstream side. A round tubular shaped outer tubular section 22 extends from the downstream side of the taper section 21. In addition, an inner tubular section 23 that has a round tubular shape with an outer diameter smaller than the inner diameter of the outer tubular section 22 is provided at the downstream side of the taper section 21. As a result, a double pipe structured by the outer tubular section 22 and the inner tubular section 23 is connected to the downstream side of the taper section 21. Furthermore, a sound insulating material layer 24 is provided between the outer tubular section 22 and the inner tubular section 23. The sound insulating material layer 24 is filled with a sound insulating material like glass wool. In other words, a longitudinal direction section of the expansion chamber 26 is surrounded by the sound insulating material layer 24 at the outer side in the diameter direction thereof. A plurality of perforations (not shown) are formed in a side surface of the inner tubular section 23, and the sound insulating material layer 24 is exposed to the inside of the expansion chamber 26 via the holes. Further, a round tubular cover section 25 is attached by welding to the downstream end of the body section 20, namely, the downstream ends of the outer tubular section 22 and the inner tubular section 23, such that the downstream end of the expansion chamber 26 is sealed.

The conduit 30 extends, preferably linearly, inside the expansion chamber 26. The upstream end of the conduit 30 passes through the upstream end of the taper section 21 of the body section 20, opens to the outside of the expansion chamber 26, and is connected to the exhaust pipe downstream end section 11c (refer to Fig. 1). Further, the downstream end of the conduit 30 passes through the cover section 25 of the body section 20 and opens to the open air outside the expansion chamber 26.

In addition, in the conduit 30, the longitudinal direction central section disposed inside the expansion chamber 26 is provided with a partition wall 35 that blocks flow of exhaust gas in the longitudinal direction inside the conduit 30.

In an upstream section 36 of the conduit 30, which is the section thereof to the upstream side of the partition wall 35, the section that is adjacent to the partition wall 35 forms an outflow section 32 that has a side surface formed with a plurality of outflow holes 32a. The outflow holes 32a allow the exhaust gas introduced into the upstream section 36 from the exhaust pipe downstream end section 11c (refer to Fig. 1) to outflow to the expansion chamber 26.

In addition, in a downstream section 37 of the conduit 30, which is the section thereof to the downstream side of the partition wall 35, the section that is adjacent to the partition wall 35 forms an inflow section 33 that has a side surface formed with a plurality of inflow holes 33a. The inflow holes 33a allow the exhaust gas, which has already flowed out to the expansion chamber 26 from the upstream section 36 via the outflow holes 32a, to flow into the downstream section 37.

The partition wall 35 is positioned to be at a location in the conduit 30 between the outflow section 32 and the inflow section 33 in the expansion chamber 26. Further, the plurality of outflow holes 32a and the inflow holes 33a have circular shapes with diameters that are the same. The outflow holes 32a and the inflow holes 33a are respectively positioned in a regular manner at predetermined intervals apart in the longitudinal direction and the circumferential direction of the conduit 30 in the respective side surfaces of the outflow section 32 and the inflow section 33.

One of the key features of the invention is that the conduit 30 has a section with a smaller inner diameter than the inner diameter of the outflow section 32 at the downstream side from the outflow section 32 of the conduit 30. More specifically, the conduit 30 as shown in Fig. 2 has a tail section 34, which is the section to the downstream side from the inflow section 33 in the downstream section 37, with the inner diameter DD2 that is smaller than the inner diameter UD2 of the outflow section 32. This tail section 34 is a section in the conduit 30 that leads exhaust gas, which has flown into the downstream section 37 via the inflow holes 33a from the expansion chamber 26, to the open air. The side surface of the tail section 34 is not formed with holes, like the outflow holes 32a and the inflow holes 33a, that allow inflow and outflow of exhaust gas to/from the expansion chamber 26. The downstream end of the tail section 34 is the downstream end of the conduit 30, and protrudes to the downstream side of the muffler body 12 from the cover section 25 of the body section 20. The downstream end of the tail section 34 is formed with an opening (not shown). Exhaust gas is exhausted from this opening to the open air.

In addition, in the conduit 30, the inner diameter DD1 of the inflow section 33 is also smaller than the inner diameter UD2 of the outflow section 32, and is equal to the inner diameter DD2 of the tail section 34. Accordingly, in the conduit 30, the inner diameter of the downstream section 37, including the inflow section 33 and the tail section 34, in the longitudinal direction is a constant size that is smaller than the inner diameter UD2 of the outflow section 32.

Moreover, the inner diameter UD2 of the outflow section 32 is equal to the inner diameter UD1 of a head section 31 that is the section to the upstream side from the outflow section 32 in the upstream section 36. Accordingly, the inner diameter DD1 of the inflow section 33 and the inner diameter DD2 of the tail section 34 are smaller than the inner diameter UD1 of the head section 31. The head section 31 is connected at the upstream end thereof to the exhaust pipe downstream end section 11c (refer to Fig. 1). The head section 31 is a section that receives exhaust gas from the exhaust pipe downstream end section 11c and guides it to the outflow section 32 at the downstream side. Note that, the side surface of the head section 31 is not formed with holes, like the inflow holes 32a and the outflow holes 33a, that allow inflow and outflow of exhaust gas to/from the expansion chamber.

With this configuration, in the conduit 30, the inner diameter of the upstream section 36 provided at the upstream side from the expansion chamber 26 is maintained without size reduction from the upstream end of the upstream section 36 to the partition wall 35, and the inner diameter of the downstream section 37 provided to the downstream side from the expansion chamber 26 is set smaller than the inner diameter of the outflow section 32 of the upstream section 36.

More specifically, in the conduit 30, since the inner diameter UD2 of the outflow section 32 is not set smaller than the inner diameter UD1 of the head section 31, the flow of exhaust gas from the outflow holes 32a formed in the side surface of the outflow section 32 into the expansion chamber 26 is not hindered, and thus the performance of the engine 6 is not reduced. Further, in the conduit 30, the inner diameter DD1 of the inflow section 33 of the downstream section 37 and the inner diameter DD2 of the tail section 34 are set to be smaller than the inner diameter UD1 of the head section 31 of the upstream section 36 and the inner diameter UD2 of the outflow section 32. As a result, exhaust noise can be effectively reduced.

In addition, in the longitudinal direction of the conduit 30, the length DL2 of the tail section 34 is larger than the combined length of the length UL2 of the outflow section 32 and the length DL1 of the inflow section 33. Further, the length DL2 of the tail section 34 is larger than the length UL1 of the head section 31. Further, the length DL1 of the inflow section 33 is equal to the length UL2 of the outflow section 32.

Moreover, the conduit 30 is structured by connecting the two pipe-shaped members, namely, the upstream passage 30a including the head section 31 and the outflow section 32 and the downstream passage 30b including the partition wall 35, the inflow section 33, and the tail section 34. More specifically, the upstream section 36 and the downstream section 37 of the conduit 30 are respectively structured by pipe-shaped members that are formed as separate units from each other. The inner diameter of the upstream passage 30a is the same as the inner diameter UD1 of the head section 31 and the inner diameter UD2 of the outflow section 32, and is constant throughout the longitudinal direction of the upstream passage 30a. The inner diameter of the downstream passage 30b is the same as the inner diameter DD1 of the inflow section 33 and the inner diameter DD2 of the tail section 34, and is constant throughout the longitudinal direction of the downstream passage 30b. Further, the downstream end of the upstream passage 30a is open, and the upstream end surface of the downstream passage 30b is a circular tubular bottomed surface that forms the partition wall 35. In addition, the conduit 30 is structured such that: the upstream end of the downstream passage 30b provided with the partition wall 35 is inserted in the opening at the downstream end of the upstream passage 30a, and the downstream end of the upstream passage 30a and the upstream end of the downstream passage 30b are connected together by welding. Note that, in the muffler body 12 equipped with the conduit 30 with this structure, exhaust gas from the engine 6 flows into the head section 31 of the upstream section 36 of the conduit 30 from the exhaust pipe downstream end section 11c (refer to Fig. 1), is led along the conduit within the upstream section 36 as far as the outflow section 32, then passes through the outflow holes 32a formed in the side surface of the outflow section 32, and then flows in to the expansion chamber 26. Then, the exhaust gas that has flowed into the expansion chamber 26 passes through the inflow holes 33a formed in the side surface of the inflow section 33, flows into the downstream section 37, and having passed along the conduit inside the tail section 34 is finally exhausted to the open air from the downstream end of the tail section 34.

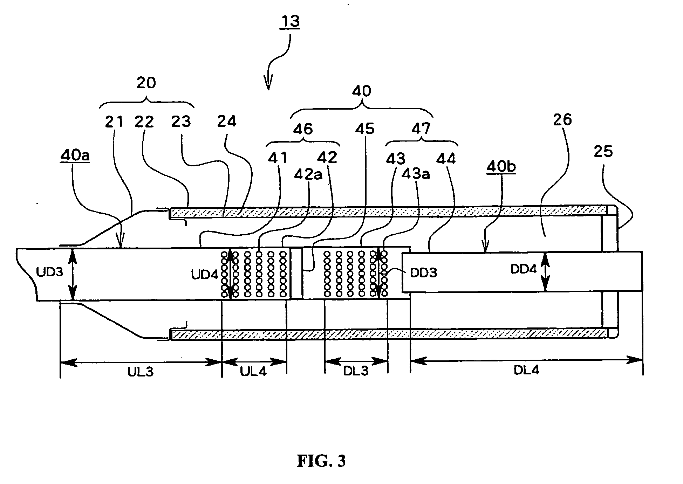

Fig. 3 is a cross sectional view of a muffler body 13 according to a second embodiment. Note that, the muffler body 13 is equipped to a motorcycle. All other structural members of the motorcycle equipped with this muffler body 13 are the same as those of the motorcycle 1 (refer to Fig. 1) according to the first embodiment, and thus a repeated explanation of these structural elements will be omitted here. Further, structural elements of the muffler body 13 that are the same as those of the muffler body 12 (refer to Fig. 2) according to the first embodiment are denoted with the same reference numerals and a repeated explanation thereof is omitted here.

A single conduit 40 that extends linearly so as to pass through the single expansion chamber 26 is provided in the muffler body 13. The conduit 40 is structured from two pipe-shaped members that are connected, namely, an upstream passage 40a and a downstream passage 40b. The upstream passage 40a includes a head section 41, an outflow section 42 having a side surface formed with outflow holes 42a, and an inflow section 43 having a side surface formed with inflow holes 43a. The downstream passage 40b has a tail section 44. A partition wall 45, which has a round tubular shape and which is formed separately from the upstream passage 40a, is attached by welding at a position between the outflow section 42 and the inflow section 43 that is the central section in the upstream passage 40a. More specifically, in the conduit 40, an upstream section 46 further to the upstream side than the partition wall 45, and the inflow section 43 of a downstream section 47 that is further to the downstream side than the partition wall 45 are formed as an integrated unit, and the tail section 44 of the downstream section 47 is formed separately. The downstream end of the upstream passage 40a and the upstream end of the downstream passage 40b are respectively open. In addition, the outer diameter of the upstream end of the downstream passage 40b and the inner diameter of the opening of the downstream end of the upstream passage 40a are substantially equal. In addition, the conduit 40 is structured such that the upstream end of the downstream passage 40b is inserted in the opening of the downstream end of the upstream passage 40a, with the downstream end of the upstream passage 40a and the upstream end of the downstream passage 40b being connected by welding.

In addition, the inner diameter of the upstream passage 40a is constant throughout the longitudinal direction thereof, namely, the inner diameter UD3 of the head section 41 that is the inner diameter of the upstream section 46, and the inner diameter UD4 of the outflow section 42, and the inner diameter DD3 of the inflow section 43 in the downstream section 47 are all the same as each other. Further, the inner diameter of the downstream passage 40b is set constantly in the longitudinal direction thereof at a size that is smaller than the inner diameter of the upstream passage 40a. More specifically, the inner diameter DD4 of the tail section 44 in the downstream section 47 is smaller than the inner diameter UD3 of the head section 41, the inner diameter UD4 of the outflow section 42, and the inner diameter DD3 of the inflow section 43, and is constant in the longitudinal direction thereof. Further, the length DL4 of the tail section 44 in the longitudinal direction of the conduit 40 is larger than the combined length of the length UL4 of the outflow section 42 and the length DL3 of the inflow section 43. Further, the length DL4 of the tail section 44 is longer than the length UL3 of the head section 41. Further, the length DL3 of the inflow section 43 is equal to the length UL4 of the outflow section 42.

With this configuration, in the conduit 40, the inner diameter of the section from the upstream end of the upstream section 46 as far as the inflow section 43 of the downstream section 47 is maintained without size reduction. Further, only the inner diameter of the tail section 44 that is the section at the downstream side of the inflow section 43 is smaller as compared to the inner diameter of the section at the upstream side from the tail section 44 including the outflow section 43.

Accordingly, in addition to there being no hindrance of the flow of exhaust gas from the upstream section 46 to the expansion chamber 26, there is also no hindrance of the flow of exhaust gas from the expansion chamber 26 to the downstream section 47. Accordingly, reduced performance of the engine can reliably be inhibited, and reduction of exhaust noise volume can be achieved.

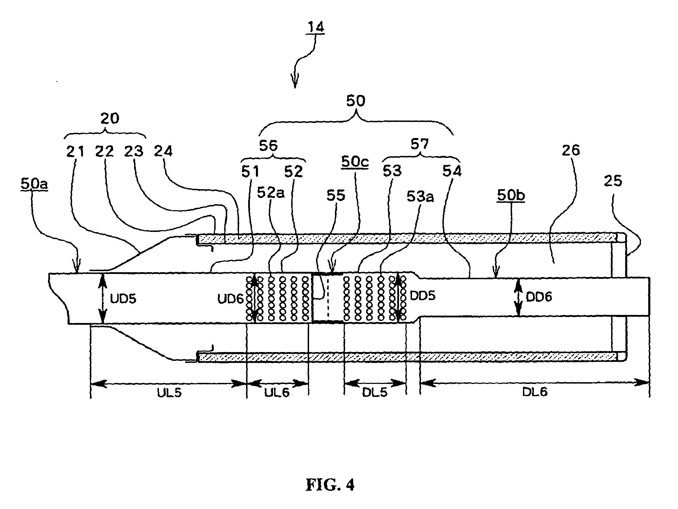

Fig. 4 is a cross sectional view of a muffler body 14 according to a third embodiment. Note that, the muffler body 14 is equipped to a motorcycle. All other structural members of the motorcycle equipped with this muffler body 14 are the same as those of the motorcycle 1 (refer to Fig. 1) according to the first embodiment, and thus a repeated explanation of these structural elements will be omitted here. Further, structural elements of the muffler body 14 that are the same as those of the muffler body 12 (refer to Fig. 2) according to the first embodiment are denoted with the same reference numerals and a repeated explanation thereof is omitted here.

A single conduit 50 that extends linearly so as to pass through the single expansion chamber 26 is provided in the muffler body 14. The conduit 50 is structured by three inter-connecting members, namely, an upstream passage 50a, a downstream passage 50b, and a connecting section 50c. The upstream passage 50a includes a head section 51, and an outflow section 52 having a side surface formed with outflow holes 52a. The downstream passage 50b has an inflow section 53 having a side surface formed with inflow holes 53a, and a tail section 54. The connecting section 50c, which is formed separately from the upstream passage 50a and the downstream passage 50b, has a round tubular shape with a bottom section that forms a partition wall 55. In other words, in the conduit 50, an upstream section 56 further to the upstream side than the partition wall 55, a downstream section 57 that is further to the downstream side than the partition wall 55, and the partition wall 55 are formed as separated units. The downstream end of the upstream passage 50a and the upstream end of the downstream passage 50b are respectively open, and the openings have inner diameters that are the same as each other. In addition, the connecting section 50c is blocked at the upstream end thereof by the partition wall 55, and is open at the downstream end thereof. In addition, the upstream end and the downstream end of the connecting section 50c have outer diameters that are the same, and that are substantially the same as the inner diameters of the openings of the downstream end of the upstream passage 50a and the upstream end of the downstream passage 50b.

In addition, the conduit 50 is structured such that: the upstream end of the connecting section 50c is inserted in the opening of the downstream end of the upstream passage 50a; the downstream end of the upstream passage 50a and the partition wall 55 of the connecting section 50c are attached by welding; the downstream end of the connecting section 50c that is open is inserted in the upstream end of the downstream passage 50b; and the downstream end of the connecting section 50c and the upstream end of the downstream passage 50b are connected by welding.

Further, the inner diameter of the upstream passage 50a is constant throughout the longitudinal direction thereof, namely, the inner diameter UD5 of the head section 51, and the inner diameter UD6 of the outflow section 52 are equal. Further, in the downstream passage 50b, the inner diameter DD5 of the inflow section 53, the inner diameter UD5 of the head section 51, and the inner diameter UD6 of the outflow section 52 are all the same as each other. In contrast to this, in the downstream passage 50b, the inner diameter DD6 of the tail section 54 that is the downstream section from the inflow section 53 is smaller than the inner diameter of the upstream side from the tail section 54, namely, the inner diameter UD5 of the head section 51, the inner diameter UD6 of the outflow section 52, and the inner diameter DD5 of the inflow section 53. Further, the outer diameter of the connecting section 50c is constant throughout the longitudinal direction thereof, and the inner diameter UD6 of the outflow section 52 and the inner diameter DD5 of the inflow section 53 are substantially the same as each other. Moreover, in the longitudinal direction of the conduit 50, the length DL6 of the tail section 54 is larger than the combined length of the length UL6 of the outflow section 52 and the length DL5 of the inflow section 53. Further, the length DL6 of the tail section 54 is longer than the length UL5 of the head section 51. Further, the length DL5 of the inflow section 53 is equal to the length UL6 of the outflow section 52.

With this configuration, in the conduit 50, the inner diameter of the section from the upstream end of the upstream section 56 as far as the inflow section 53 of the downstream section 57 is maintained without size reduction. Further, only the inner diameter of the tail section 54 that is the section at the downstream side of the inflow section 53 is smaller as compared to the inner diameter of the section at the upstream side from the tail section 54 including the outflow section 53.

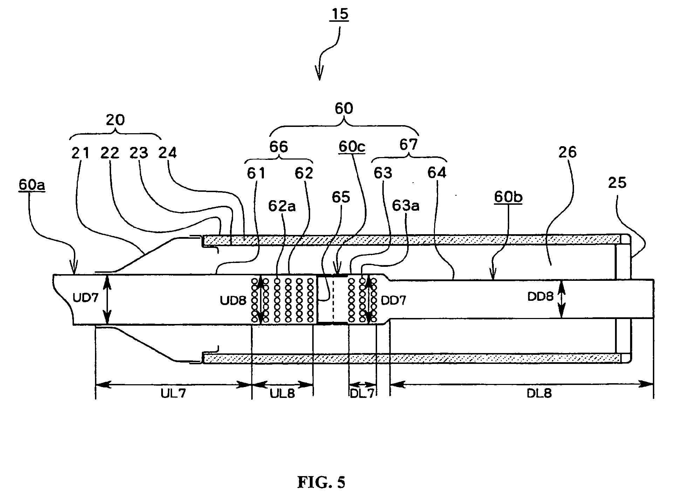

Fig. 5 is a cross sectional view of a muffler body 15 according to a fourth embodiment. Note that, the muffler body 15 is equipped to a motorcycle. All other structural members of the motorcycle equipped with this muffler body 15 are the same as those of the motorcycle 1 (refer to Fig. 1) according to the first embodiment, and thus a repeated explanation of these structural elements will be omitted here. Further, structural elements of the muffler body 15 that are the same as those of the muffler body 12 (refer to Fig. 2) according to the first embodiment are denoted with the same reference numerals and a repeated explanation thereof is omitted here.

A single conduit 60 that extends linearly so as to pass through the single expansion chamber 26 is provided in the muffler body 15. Like the muffler body 14 according to the third embodiment shown in Fig. 4, the conduit 60 is structured by three inter-connecting members, namely, an upstream passage 60a, a downstream passage 60b, and a connecting section 60c. The upstream passage 60a is formed in to a head section 61, and an upstream section 66 having an outflow section 62 with a side surface formed with outflow holes 62a. The downstream passage 60b is formed in to an inflow section 63 having a side surface formed with inflow holes 63a, and a downstream section 67 having a tail section 64. The connecting section 60c, which is formed separately from the upstream passage 60a and the downstream passage 60b, has a round tubular shape with a bottom section that forms a partition wall 65.

In addition, the inner diameter UD7 of the head section 61 of the upstream passage 60a, and the inner diameter UD8 of the outflow section 62, and the inner diameter DD7 of the inflow section 63 of the downstream passage 60b are equal. In contrast to this, in the downstream passage 60b, the inner diameter DD8 of the tail section 64 that is the downstream section from the inflow section 63 is smaller than the inner diameter of the upstream side from the tail section 64, namely, the inner diameter UD7 of the head section 61, the inner diameter UD8 of the outflow section 62, and the inner diameter DD7 of the inflow section 63.

Moreover, in the longitudinal direction of the conduit 60, the length DL8 of the tail section 64 is larger than the combined length of the length UL8 of the outflow section 62 and the length DL7 of the inflow section 63. Further, the length DL8 of the tail section 64 is longer than the length UL7 of the head section 61. Further, the length DL7 of the inflow section 63 is smaller than the length UL8 of the outflow section 62. As a result, the length DL8 of the tail section 64 of the conduit 60 is made larger than the length DL6 of the tail section 54 of the conduit 50 shown in Fig. 4. Accordingly, with this structure, exhaust noise can be suppressed even more effectively.

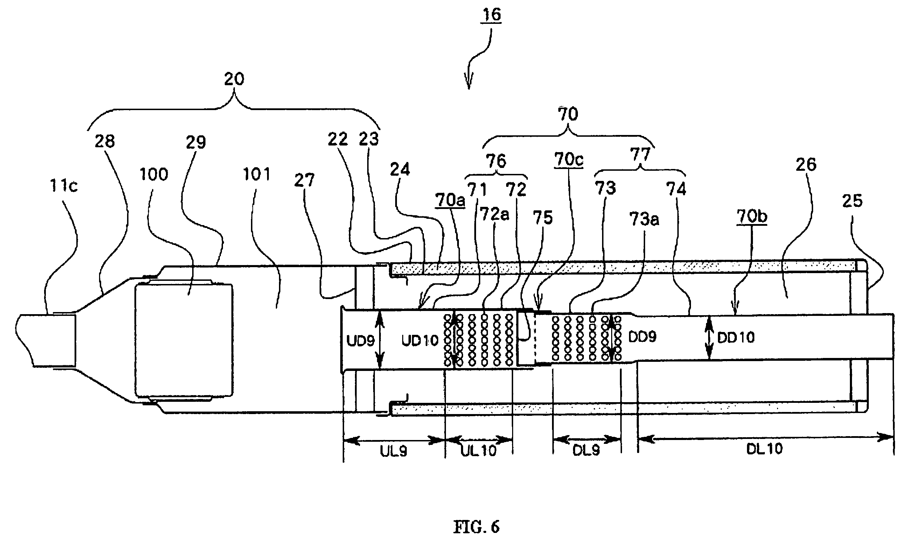

Fig. 6 is a cross sectional view of a muffler body 16 according to a fifth embodiment. Note that, the muffler body 16 is equipped to a motorcycle. All other structural members of the motorcycle equipped with this muffler body 16 are the same as those of the motorcycle 1 (refer to Fig. 1) according to the first embodiment, and thus a repeated explanation of these structural elements will be omitted here. Further, structural elements of the muffler body 16 that are the same as those of the muffler body 12 (refer to Fig. 2) according to the first embodiment are denoted with the same reference numerals and a repeated explanation thereof is omitted here.

The body section 20 of the muffler body 16 is connected to the exhaust pipe downstream end section 11c at the upstream end section of the body section 20, and has a taper section 28 that has a taper shape that has an inner diameter that increases toward the downstream side from the connecting section; an extending section 29 that has a round tubular shape and that is connected to the downstream side of the taper section 28; and the outer tubular section 22 and the inner tubular section 23 that structure a double pipe that is connected to the downstream side of the extending section 29. Furthermore, the sound insulating material layer 24 filled with the sound insulating material is provided between the outer tubular section 22 and the inner tubular section 23.

A partition 27 that has a round tubular shape and that blocks flow of exhaust gas in the longitudinal direction inside the body section 20 is provided at a longitudinal direction central section of the body section 20. In addition, the expansion chamber 26 is provided in the downstream section from the partition 27 in the body section 20, and has its upstream end and downstream end respectively blocked by the partition 27 and the cover section 25. Moreover, a front chamber 101 is provided in the upstream section from the partition 27 in the body section 20, and has its upstream end and downstream end blocked respectively by the taper section 28 and the partition 27. With this configuration, the partition 27 is used to provide one each of the front chamber 101 and the expansion chamber 26 in the body section 20 at the upstream side and the downstream side thereof.

Further, the conduit 70 of the muffler body 16 extends linearly in the longitudinal direction within the expansion chamber 26 from the partition 27 to the cover section 25 in the body section 20, thereby passing through the expansion chamber 26. The upstream end of the conduit 70 passes through the partition 27, and opens inside the front chamber 101 that is adjacent to the expansion chamber 26 via the partition 27. Further, the downstream end of the conduit 70 passes through the cover section 25 and opens to the open air. With this configuration, the conduit 70 only passes through the expansion chamber 26 in the body section 20 and does not pass through the front chamber 101. Accordingly, the conduit 70 does not pass all the way through the body section 20.

A catalyst device 100 for reforming exhaust gas is provided to straddle between the taper section 28 and the extending section 29 in the central section in the longitudinal direction in the front chamber 101. The catalyst device 100 is structured such that the exhaust gas passes from the upstream side to the downstream side in the catalyst device 100 while being subjected to the reaction of the catalyst in the catalyst device 100.

Accordingly, with this structure, the exhaust gas flows first from the exhaust pipe downstream end section 11c to the section of the front chamber 101 that is at the upstream side from the catalyst device 100. The exhaust gas then continues to pass to the downstream side of the catalyst device 100, and having been reformed by the reaction of the catalyst in the catalyst device 100, flows out to the section of the front chamber 101 that is to the downstream side of the catalyst device 100. The reformed exhaust gas flows into the conduit 70 from the upstream end of the conduit 70 that is open in the partition 27. The exhaust gas then flows out to the expansion chamber 26 via the outflow holes 72a of the conduit 70, and then flows into the conduit 70 again via the inflow holes 73a of the conduit 70. Then, the exhaust gas is finally exhausted in to the open air from the opening at the downstream end of the tail section 74 of the conduit 70.

The conduit 70 is structured by three inter-connecting members, namely, an upstream passage 70a, a downstream passage 70b, and a connecting section 70c. The upstream passage 70a has a head section 71, and an outflow section 72 having a side surface formed with outflow holes 72a. The downstream passage 70b has an inflow section 73 having a side surface formed with inflow holes 73a, and a tail section 74. The connecting section 70c, which is formed separately from the upstream passage 70a and the downstream passage 70b, has a round tubular shape with a bottom section that forms a partition wall 75. More specifically, in the conduit 70, an upstream section 76 further to the upstream side than the partition wall 75, a downstream section 77 that is further to the downstream side than the partition wall 75, and the partition wall 75 are formed as separate units. The downstream end of the upstream passage 70a and the upstream end of the downstream passage 70b are respectively open, and the outer diameter of the upstream end of the downstream passage 70b is slightly smaller than the inner diameter of the opening of the upstream passage 70a. The connecting section 70c is blocked at the upstream end thereof by the partition wall 75, and the downstream end thereof is open. The inner diameter and the outer diameter of the connecting section 70c are constant in the longitudinal direction. Further, the outer diameter of the upstream end of the connecting section 70c and the inner diameter of the opening of the downstream end of the upstream passage 70a are substantially equal, and the inner diameter of the downstream end of the connecting section 70c and the outer diameter of the upstream end of the downstream passage 70b are substantially equal. In addition, the conduit 70 is structured such that: the upstream end of the connecting section 70c is inserted in the opening of the downstream end of the upstream passage 70a; the downstream end of the upstream passage 70a and the partition wall 75 of the connecting section 70c are attached together by welding; the upstream end of the downstream passage 70b is inserted in the opening of the downstream end of the connecting section 70c; and the downstream end of the connecting section 70c and the upstream end of the downstream passage 70b are connected by welding.

In the conduit 70, the inner diameter of the upstream passage 70a is constant throughout the longitudinal direction thereof. More specifically, the inner diameter UD9 of the head section 71, and the inner diameter UD10 of the outflow section 72 are the same. Further, in the downstream passage 70b, the inner diameter DD9 of the downstream section 73 is smaller than the inner diameter of the upstream passage 70a, namely, the inner diameter UD9 of the head section 71, and the inner diameter UD10 of the outflow section 72. Further, in the downstream passage 70b, the inner diameter DD10 of the tail section 74 that is the section to the downstream side of the inflow section 73 is even smaller that the inner diameter DD9 of the inflow section 73. More specifically, the inner diameter DD10 of the tail section 74 is smaller than the inner diameter UD9 of the head section 71 and the inner diameter UD10 of the outflow section 72. Further, the length DL10 of the tail section 74 in the longitudinal direction of the conduit 70 is larger than the combined length of the length UL10 of the outflow section 72 and the length DL9 of the inflow section 73. Further, the length DL10 of the tail section 74 is longer than the length UL9 of the head section 71. Further, the length DL9 of the inflow section 73 is equal to the length UL10 of the outflow section 72.

With this configuration, in the conduit 70, the inner diameter of the upstream section 76 from the head section 71 as far the outflow section 72 is maintained without size reduction. Further, the inner diameter DD9 of the inflow section 73 of the downstream section 77 and the inner diameter DD10 of the tail section 74 are smaller as compared to the inner diameter of the upstream section 76 including the outflow section 72. Moreover, in the conduit 70, the inner diameter DD9 of the inflow section 73 is smaller as compared to the inner diameter UD10 of the outflow section 72, and the inner diameter DD10 of the tail section 74 is smaller as compared to the inner diameter DD9 of the inflow section 73. Accordingly, the inner diameter of the downstream passage 77 reduces in a step-like manner toward the downstream side.

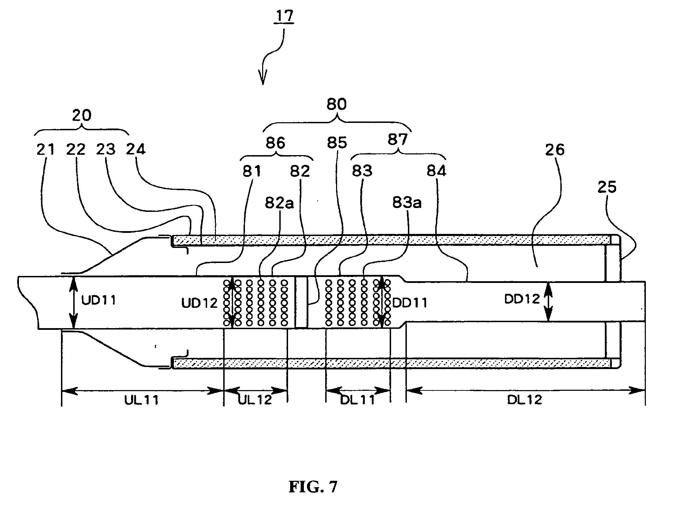

Fig. 7 is a cross sectional view of a muffler body 17 according to a sixth embodiment. Note that, the muffler body 17 is equipped to a motorcycle. All other structural members of the motorcycle equipped with this muffler body 17 are the same as those of the motorcycle 1 (refer to Fig. 1) according to the first embodiment, and thus a repeated explanation of these structural elements will be omitted here. Further, structural elements of the muffler body 17 that are the same as those of the muffler body 12 (refer to Fig. 2) according to the first embodiment are denoted with the same reference numerals and a repeated explanation thereof is omitted here.

A single conduit 80 that extends linearly so as to pass through the single expansion chamber 26 is provided in the muffler body 17. The conduit 80 is structured from a single pipe-shaped member having a head section 81, an outflow section 82 having a side surface formed with outflow holes 82a, an inflow section 83 having a side surface formed with inflow holes 83a, and a tail section 84. A partition wall 85, which has a round tubular shape and which is formed separately from the conduit 80, is attached by welding at a position between the outflow section 82 and the inflow section 83 that is the central section in longitudinal direction of the conduit 80. More specifically, in the conduit 80, an upstream section 86 further to the upstream side than the partition wall 85, and a downstream section 87 that is further to the downstream side than the partition wall 85 are formed as an integrated unit.

In addition, the inner diameter of the conduit 80 is constant throughout the longitudinal direction thereof, from the upstream section 86 as far as the inflow section 83 of the downstream section 87. In other words, the inner diameter UD11 of the head section 81, the inner diameter UD12 of the outflow section 82, and the inner diameter DD11 of the inflow section 83 are all the same as each other. In contrast to this, in the downstream section 87, the inner diameter DD12 of the tail section 84 that is the section downstream from the inflow section 83 is smaller than the inner diameter UD11 of the head section 81, the inner diameter UD12 of the outflow section 82, and the inner diameter DD11 of the inflow section 83. Further, in the longitudinal direction of the conduit 80, the length DL12 of the tail section 84 is larger than the combined length of the length UL12 of the outflow section 82 and the length DL11 of the inflow section 83. Further, the length DL12 of the tail section 84 is longer than the length UL11 of the head section 81. Further, the length DL11 of the inflow section 83 is equal to the length UL12 of the outflow section 82.

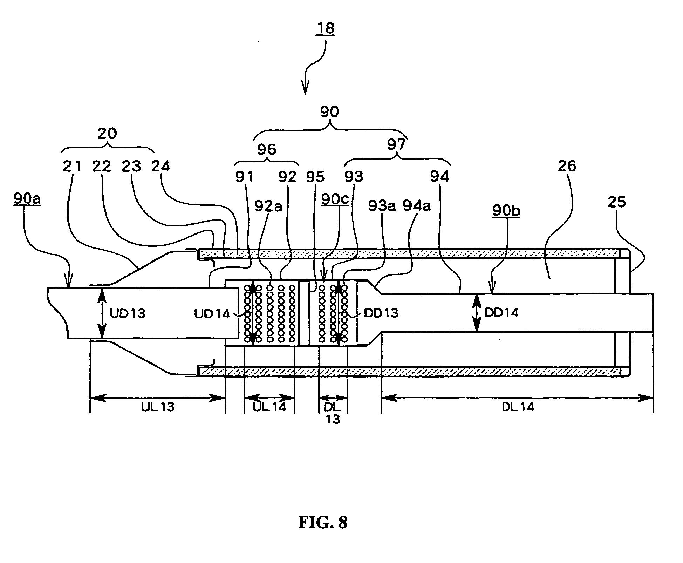

Fig. 8 is a cross sectional view of a muffler body 18 according to a seventh embodiment. Note that, the muffler body 18 is equipped to a motorcycle. All other structural members of the motorcycle equipped with this muffler body 18 are the same as those of the motorcycle 1 (refer to Fig. 1) according to the first embodiment, and thus a repeated explanation of these structural elements will be omitted here. Further, structural elements of the muffler body 18 that are the same as those of the muffler body 12 (refer to Fig. 2) according to the first embodiment are denoted with the same reference numerals and a repeated explanation thereof is omitted here.

A single conduit 90 that extends linearly so as to pass through the single expansion chamber 26 is provided in the muffler body 18. The conduit 90 is structured by three inter-connecting pipe-shaped members, namely, an upstream passage 90a, a downstream passage 90b, and a connecting section 90c. The upstream passage 90a includes a head section 91. The connecting section 90c has an outflow section 92 having a side surface formed with outflow holes 92a, and an inflow section 93 having a side surface formed with inflow holes 93a. The downstream passage 90b has a tail section 94. A partition wall 95, which has a round tubular shape and which is formed separately from the upstream passage 90a, the downstream passage 90b, and the connecting section 90c, is attached by welding at a position between the outflow section 92 and the inflow section 93 at the central section in the longitudinal direction of the connecting section 90c. More specifically, in the conduit 90, an exhaust gas inflow section is formed by the head section 91 in an upstream section 96 that is further to the upstream side than the partition wall 95, the outflow section 92 of the upstream section 96, and the inflow section 93 in the downstream section 97 that is further to the downstream side than the partition wall 95. This exhaust gas inflow section, the tail section 94 in the downstream section 97, and the partition wall 95 are formed as separate units. The downstream end of the upstream passage 90a, the upstream end and the downstream end of the connecting section 90c, and the upstream end of the downstream passage 90b are respectively open. The inner diameter of the opening of the upstream end of the connecting section 90c is substantially equal to the outer diameter of the downstream end of the upstream passage 90a, and the inner diameter of the opening of the downstream end of the connecting section 90c is substantially equal to the outer diameter of the upstream end of the downstream passage 90b. In addition, the conduit 90 is structured such that the downstream end of the upstream passage 90a is inserted in the opening of the upstream end of the connecting section 90c; the downstream end of the upstream passage 90a and the upstream end of the connecting section 90c are attached by welding; the open upstream end of the downstream passage 90b is inserted in the opening of the downstream end of the connecting section 90c; and the downstream end of the connecting section 90c and the upstream end of the downstream passage 90b are connected by welding.

In the conduit 90, an inner diameter of the upstream passage 90a is constant throughout the longitudinal direction thereof. Further, the inner diameter UD14 of the outflow section 92 of the connecting section 90c and the inner diameter DD13 of the inflow section 93 are equal to each other. In addition, the inner diameter UD14 of the outflow section 92 and the inner diameter DD13 of the inflow section 93 are larger than the inner diameter of the section to the upstream side from the outflow section 92, namely, the inner diameter of the upstream passage 90a including the inner diameter UD13 of the head section 91. Further, in the downstream passage 90b, the inner diameter of the upstream section is smaller than the inner diameter UD14 of the outflow section 92 and the inner diameter DD13 of the inflow section 93, and is larger than the inner diameter UD13 of the head section 91.

In addition, in the downstream passage 90b, the inner diameter DD14 of the head section 94 is smaller than the inner diameter UD14 of the outflow section 92 and the inner diameter DD13 of the inflow section 93, and in addition is smaller than the inner diameter UD13 of the head section 91. In other words, in the conduit 90, the inner diameter UD14 of the outflow section 92, the inner diameter DD13 of the inflow section 93, the inner diameter UD13 of the head section 91, and the inner diameter DD14 of the tail section 94 become gradually smaller in that order in a step-like manner.

With this configuration, in the conduit 90, since the inner diameter UD14 of the outflow section 92 is set larger than the inner diameter UD13 of the head section 91, the open hole area of the outflow holes 92a formed in the side surface of the outflow section 92 is increased. As a result, it is possible to promote flow of exhaust gas from the upstream section 96 to the expansion chamber 26, thereby improving the performance of the engine 6 while at the same time effectively reducing exhaust noise.

Note that, the muffler and the vehicle according to the invention are not limited to the examples described above. More specifically, for example, the muffler body is not limited to having just one expansion chamber, and a plurality of expansion chambers may be provided. In this case a conduit may be provided to pass through each expansion chamber. Further, the shape, number and arrangement etc. of the outflow holes and inflow holes formed in the side surface of the conduit are not limited to those described above, and a different design may be chosen. In addition, for example, the shape, number, arrangement etc. of the outflow holes and the inflow holes may be the mutually the same, or may be mutually different. Further, for example, in the longitudinal direction of the conduit, the length of the tail section may be set to be equal to the combined length of the length of the outflow section and the length of the inflow section.

### Description of the Reference Numerals and Signs

1 Motorcycle, 2 Front wheel, 3 Rear wheel, 4 Seat, 5 Fuel tank, 6 Engine, 6a Crank case, 6b Front cylinder head section, 6c Rear cylinder head section, 10 muffler, 11 exhaust pipe, 11a Front exhaust pipe, 11b Rear exhaust pipe, 11c Exhaust pipe downstream end section, 12, 13, 14, 15, 16, 17, 18 Muffler body, 20 Body section, 21, 28 Taper section, 22 Outer cylinder section, 23 Inner cylinder section, 24 Sound insulating material layer, 25 Cover section, 26 Expansion chamber, 27 Partition, 30, 40, 50, 60, 70, 80, 90 Conduit, 30a, 40a, 50a, 60a, 70a, 90a Upstream passage, 30b, 40b, 50b, 60b, 70b, 90b Downstream passage, 31, 41, 51, 61, 71, 81, 91 Head section, 32, 42, 52, 62, 72, 82, 92 Outflow section, 32a, 42a, 52a, 62a, 72a, 82a, 92a Outflow holes, 33, 43, 53, 63, 73, 83, 93 Inflow section, 33a, 43a, 53a, 63a, 73a, 83a, 93a Inflow holes, 34, 44, 54, 64, 74, 84, 94 Tail section, 35, 45, 55, 65, 75, 85, 95 Partition wall, 36, 46, 56, 66, 76, 86, 96 Upstream section, 37, 47, 57, 67, 77, 87, 97 Downstream section, 50c, 60c, 70c, 90c Connecting section, 100 Catalyst device, 101 Front chamber, UD1, UD3, UD5, UD7, UD9, UD11, UD13 Head section inner diameter, UD2, UD4, UD6, UD8, UD10, UD12, UD14 Outflow section inner diameter, DD1, DD3, DD5, DD7, DD9, DD11, DD13 Inflow section inner diameter, DD2, DD4, DD6, DD8, DD10, DD12, DD14 Tail section inner diameter, UL1, UL3, UL5, UL7, UL9, UL11, UL13 Length of head section, UL2, UL4, UL6, UL8, UL10, UL12, UL14 Length of outflow section, DL1, DL3, DL5, DL7, DL9, DL11, DL13 Length of inflow section, DL2, DL4, DL6, DL8, DL10, DL12, DL14 Length of the tail section.

## Claims

1. A muffler (10) comprising an expansion chamber (26) and a conduit (30) that passes through the expansion chamber (26), wherein
the conduit (30) comprises:
a partition region (35);
an upstream section (36) provided to the upstream side of the partition region (35) and having an outflow section (32) defining at least one outflow hole (32a) that allows exhaust gas to flow out into the expansion chamber (26) ; and
a downstream section (37) provided to the downstream side of the partition region (35) and having an inflow section (33) defining at least one inflow hole (33a) that allows exhaust gas to flow in from the expansion chamber (26), wherein
the inner diameter (DD2) of at least one section (34) of the downstream section (37) is smaller than the inner diameter (UD2) of the outflow section (32). **characterized in that** the partition region (35) comprises a partition wall within the conduit (30).

2. The muffler (10) according to claim 1, wherein
the at least one section (34) of the downstream section (37) is located to the downstream side of the inflow section (33).

3. The muffler (10) according to claim 1 or 2, wherein
the inner diameter (UD2) of the outflow section (32) is equal to or greater than the inner diameter (UD1) of a section of the conduit (30) to the upstream side of the outflow section (32).

4. The muffler (10) according to claim 1, 2 or 3, wherein
the length (DL2) of the at least one section (34) of the downstream section (37) is equal to or greater than the combined lengths (UL2, DL1) of the outflow section (32) and the inflow section (33).

5. The muffler (10) according to any preceding claim, wherein the partition region (35) is provided at a central section of the conduit (30).

6. A vehicle (1) comprising a muffler (10) according to any one of claims 1 to 5.

## Patentansprüche

1. Schalldämpfer (10), der einen Expansionsraum (26) und einen Kanal (30) aufweist, der durch den Expansionsraum (26) verläuft, wobei
der Kanal (30) aufweist:
einen Trennwandbereich (35);
einen stromaufwärts gelegenen Abschnitt (36), der auf der stromaufwärts gelegenen Seite des Trennwandbereiches (35) vorhanden ist und einen Ausströmabschnitt (32) aufweist, der mindestens ein Ausströmloch (32a) definiert, das das Ausströmen des Abgases in den Expansionsraum (26) hinein gestattet; und
einen stromabwärts gelegenen Abschnitt (37), der auf der stromabwärts gelegenen Seite des Trennwandbereiches (35) vorhanden ist und einen Einströmabschnitt (33) aufweist, der mindestens ein Einströmloch (33a) definiert, das das Einströmen des Abgases aus dem Expansionsraum (26) gestattet, wobei
der Innendurchmesser (DD2) von mindestens einem Abschnitt (34) des stromabwärts gelegenen Abschnittes (37) kleiner ist als der Innendurchmesser (UD2) des Ausströmabschnittes (32),
**dadurch gekennzeichnet, dass** der Trennwandbereich (35) eine Trennwand innerhalb des Kanals (30) aufweist.

2. Schalldämpfer (10) nach Anspruch 1, bei dem der mindestens eine Abschnitt (34) des stromabwärts gelegenen Abschnittes (37) auf der stromabwärts gelegenen Seite des Einströmabschnittes (33) angeordnet ist.

3. Schalldämpfer (10) nach Anspruch 1 oder 2, bei dem
der Innendurchmesser (UD2) des Ausströmabschnittes (32) gleich dem oder größer als der Innendurchmesser (UD1) eines Abschnittes des Kanals (30) auf der stromaufwärts gelegenen Seite des Ausströmabschnittes (32) ist.

4. Schalldämpfer (10) nach Anspruch 1, 2 oder 3, bei dem
die Länge (DL2) des mindestens einen Abschnittes (34) des stromabwärts gelegenen Abschnittes (37) gleich den oder größer als die kombinierten Längen (UL2, DL1) des Ausströmabschnittes (32) und des Einströmabschnittes (33) ist.

5. Schalldämpfer (10) nach einem der vorhergehenden Ansprüche, bei dem der Trennwandbereich (35) in einem mittleren Abschnitt des Kanals (30) bereitgestellt wird.

6. Fahrzeug (1), das einen Schalldämpfer (10) nach einem der Ansprüche 1 bis 5 aufweist.

## Revendications

1. Silencieux (10), comprenant une chambre d'expansion (26) et un conduit (30) traversant la chambre d'expansion (26), dans lequel
le conduit (30) comprend :
une région de cloisonnement (35) ;
une section amont (36) agencée sur le côté amont de la région de cloisonnement (35) et comportant une section d'évacuation (32), définissant au moins un trou d'évacuation (32a), permettant l'évacuation des gaz d'échappement dans la chambre d'expansion (26) ; et
une section aval (37), agencée sur le côté aval de la région de cloisonnement (35) et comportant une section d'admission (33), définissant au moins un trou d'admission (33a), permettant l'admission des gaz d'échappement provenant de la chambre d'expansion (26) ;
le diamètre intérieur (DD2) d'au moins une section (34) de la section aval (37) étant inférieur au diamètre intérieur (UD2) de la section d'évacuation (32) ;
**caractérisé en ce que** la région de cloisonnement (35) comprend une paroi de séparation dans le conduit (30).

2. Silencieux (10) selon la revendication 1, dans lequel la au moins une section (34) de la section aval (37) est agencée sur le côté aval de la section d'admission (33).

3. Silencieux (10) selon les revendications 1 ou 2, dans lequel
le diamètre intérieur (UD2) de la section d'évacuation (32) est égal ou supérieur au diamètre intérieur (UD1) d'une section du conduit (30) agencée sur le côté amont de la section d'évacuation (32).

4. Silencieux (10) selon les revendications 1, 2 ou 3, dans lequel
la longueur (DL2) de la au moins une section (34) de la section aval (37) est égale ou supérieure aux longueurs combinées (UL2, DL1) de la section d'évacuation (32) et de la section d'admission (33).

5. Silencieux (10) selon l'une quelconque des revendications précédentes, dans lequel la région de cloisonnement (35) est agencée au niveau d'une section centrale du conduit (30).

6. Véhicule (1), comprenant un silencieux (10) selon l'une quelconque des revendications 1 à 5.
